# EUROPEAN PATENT APPLICATION

(11) **EP 3 269 253 A1**
(43) Date of publication of application: **17.01.2018**
(21) Application number: 16764272.7
(22) Date of filing: 26.02.2016
(51) Int. Cl.: A23L 3/3409

(54) **METHOD FOR THE SURFACE DECONTAMINATION OF PACKAGED SOLID FOOD**

(30) Priority: 13.03.2015 ES 201530326
(71) Applicant: Universidad Politecnica de Cartagena, 30202 Cartagena (Murcia) (ES)
(72) Inventor: LOPEZ GOMEZ, Antonio, 30202 Cartagena (Murcia) (ES); LÓPEZ CÁNOVAS, David Antonio, 30320 - Fuente Álamo (Murcia) (ES)
(74) Representative: Carvajal y Urquijo, Isabel
(86) International application number: PCT/ES2016/070128
(87) International publication number: WO 2016/146864

(57) **Abstract**

The invention relates to a method for the microbial decontamination of packaged solid food by means of essential oils (EOs), comprising vacuum evaporation of the EOs, and vacuum applying the EO vapours to the solid food arranged in an open container, wherein said vapours are drawn along by air or by a mixture of food-grade gases and guided to the vacuum enclosure containing the packaged food to be microbiologically decontaminated.

## Description

### Object of the Invention

The present invention relates to a method for the surface decontamination of packaged solid food, such that decontamination is carried out with essential oil (EO) vapours that are vacuum-generated and vacuum-applied, before or during the closure of the containers and/or before container dispatch.

The object is generally included in the field of technology for the surface decontamination of solid food that is either fresh or processed; food of a plant origin, fresh fruits and vegetables that are either whole or cut up, salads of any type and composition; food of an animal origin: sliced meat products, sliced cheeses; bakery products, sliced bread, pastry goods, and prepared dishes which may sustain some type of surface contamination before or after being packaged and before heat sealing,.

### Background of the invention

In recent years there has been a growing demand for ready-to-eat food (referred to as RTE food), such as ready-to-eat salads with green-leafy vegetables, for example, or low-fat cooked ham in slices. This demand is still growing, and it is also expected to grow in the coming years. This sustained trend corresponds with the increasingly greater interest that people have in adopting healthier eating habits.

At the same time, RTE vegetables and vegetable salads, as well as cooked meat products in slices, have been found, with significant frequency, to be the cause of food poisoning outbreaks in many parts of the world. Both in Europe and in the USA, it has been clearly shown that there is a relationship between some pathogenic agents and some of these RTE food products in most of the recent outbreaks of foodborne diseases.

In the case of vegetable salads, since they have a high surface/weight ratio and a relatively high pH, they constitute a suitable medium for the development of a large microbial population, particularly bacteria, which can contribute to the natural decomposition of the separate vegetative plant organs (Nguyen-The and Carlin, 1994; Ragaert *et al.,* 2007). Pathogens such as *Listeria monocytogenes, Salmonella* and *Escherichia coli* O157-H7, can contaminate the product during the harvesting, processing and packaging of salads (Franz and van Bruggen, 2008). Enteric pathogens and microorganisms may be protected against the action of disinfectants applied while washing the vegetables due to surface irregularities on leaves, lesions in plant tissues, inclusion in phyllosphere biofilms or internalization in the plant (Gómez-López *et al.,* 2008). Furthermore, storage at a low-temperature and modified atmosphere (MA) may represent a weak obstacle against the proliferation of psychrophilic pathogenic microorganisms such as *Listeria* (Jacxsens *et al.,* 2001; Junttila *et al.,* 1988; Scifo *et al.,* 2009). This is how the different microbiological studies of these RTE salads have detected the presence of enteric pathogenic bacteria, *Escherichia coli,* coliform bacteria, total aerobic bacteria and spoilage microorganisms, such as fungi and yeasts (Abadías *et al.,* 2008; Fröder *et al*., 2007; Loncarevic *et al.,* 2005; Pavan da Silva *et al.,* 2007; Pianetti *et al.,* 2008; Valentin-Bon *et al.,* 2008). Most counts found ranged between 4 and 8 log CFU/g for total aerobic bacteria and between 0.7 (limit of detection) and 6 log CFU/g for coliform bacteria.

Furthermore, according to papers by Caponigro *et al.* (2010), the rate of increase of microbial populations during salad shelf life was not greatly affected by the initial level of contamination because it was already quite high in the recently packaged salad. In fact, these studies found that over 20% of the analyzed batches already had an initial load greater than 6 log CFU/g. This is a very high microbial load, despite having performed the washing and decontamination following the recommendations provided under the law in force. Therefore, at the expiration date the total aerobe counts exceeded 7.2 log CFU/g in 50% of the batches and 7.7 log CFU/g in 25%.

Washing with water alone reduces the microbial load of salads about 10-fold, whereas chlorinated water achieves a 100-fold reduction. This decontamination together with the use of modified atmosphere and cold storage achieves control of the usual microbial load, but it would be unable to stop the proliferation of psychrophilic pathogenic microorganisms such as *Listeria monocytogenes,* which could grow at the usual cold storage temperatures of 3 to 7°C. This corresponds with what has already been observed and previously discussed by Caponigro *et al.* (2010).

In summary, it is clearly shown that the current methods for processing and packaging vegetable salads, alone or mixed, do not offer any significant food safety guarantees against the occurrence at any time of a food poisoning outbreak originating from these salads.

The foregoing has set the stage for the proposals of new washing and decontamination technologies which are, in principle, more effective for being applied to the washing of salads before they are packaged (Gil *et al.,* 2009; Artés *et al.,* 2009). Proposals have been made for antimicrobial solutions in water (peroxyacetic acid, chlorine dioxide, hydrogen peroxide, organic acids, electrolysed water), treatment with hot water, UV-C radiation, ozonated water, superatmospheric oxygen (combined with MAP), MAP enriched with inert gases (Ar, He, Xe) or N₂O (Artés *et al.,* 2009; Graça *et al.,* 2011). However, most proposals never become more effective than washing with chlorinated water; in fact, they are often times presented as an alternative to this washing method to avoid using chlorine (Issa-Zacharia *et al.,* 2011).

Something similar happens, for example, with cooked ham slices and slices of other similar cooked meat products, e.g., pig or turkey, or with cut fresh dairy products. When they are packaged, they may have a high microbial count, including both pathogenic microorganisms (for example, *Listeria monocytogenes*) and spoilage microorganisms (for example, lactic acid bacteria). If no effective preservative is applied and no decontamination or pasteurization or sterilization treatment is performed before or after the closure of the container, the packaged product may carry pathogenic microorganisms and may contain a spoilage microbial load that significantly reduces its shelf life (Seow *et al.,* 2014; Han *et al.,* 2014; Barbosa *et al.,* 2014).

Essential oils, hereinafter EOs, are GRAS (Generally Recognised as Safe) substances that can be used in food as antimicrobial substances, while at the same time having aromatic properties that may be particularly interesting in food (Moreira *et al.,* 2005).

EOs or essences of aromatic plants are volatile substances with an oily consistency that are usually produced by plants. They are synthesized by all the organs of the plant, i.e., shoots or buds, flowers, leaves, stems, branches, seeds, fruits, roots, or the wood or bark. There are over 3,000 types of essential oils, though only about 300 types are sold on the market. On the other hand, essential oils are complex mixtures of more than 100 volatile components biosynthesized by plants, including primarily terpenes and terpenoids, and aromatic and aliphatic constituents, all of which are characterized by having a low molecular weight. Most of the antimicrobial activity in EOs is concentrated in oxygenated terpenoid compounds (for example, phenolic terpenes and alcohols), although some hydrocarbons also have antimicrobial effects. Some studies have demonstrated that pure EOs, i.e., Eos that include all their components, generally have greater antimicrobial activity than the mixtures of their main components, which suggests that the minor components may be critical for achieving a certain antimicrobial activity against given microorganisms. On the other hand, it has been observed that in given cases, the mixture of pure essential oils with given major or minor components of these essential oils can achieve a greater antimicrobial effect (Inouye *et al.,* 2006; Bassolé and Juliani, 2012).

Vapours of linalool and citral, which are components of some EOs, have been clearly shown to reduce the microbial load of Gram-positive bacteria on cabbage leaf, achieving a bacterial reduction of up to 6.5 log CFU/2 cm² of sample (Fisher and Phillips, 2006). Bergamot, linalool and citral EO vapours, with minimum inhibitory doses (MID) ranging between 2% and 0.06%, have been tested against strains of *Arcobacter butzleri* in cabbage leaf, and a microbial load reduction (of 7 log CFU/2 cm²) to an undetectable level (Fisher *et al.,* 2009) has been observed. This corresponds with earlier research which clearly shows that the MIDs of the EO vapours in reference to pathogen inhibition are lower than the MIDs of the same oil but in liquid form (Inouye, 2003; Fisher and Phillips, 2006). For example, when an agar dilution method is used for *Escherichia coli,* the minimum inhibitory concentrations (MICs, µg/mL) and the MIDs (µg/cm²), respectively, for the different essential oils are:

| Essential oil | MICs (µg/mL) (in liquid form) | MIDs (µg/cm²) (as vapour) |
|---|---|---|
| Lemon | 3200 | 100 |
| Citral | 800 | 12.5 |
| Linalool | 3200 | 50 |
| Limonene | 3200 | 800 |

This same EO behavioural pattern was also observed on the microorganism *S*. *aureus* (Inouye, 2003). These results are of enormous interest in the use of essential oils of citrus fruits in food since the concentrations required when applied in vapour form are much lower than if they are applied in liquid form. This would be a way to work around the EO usage limitation due to the possible unwanted effect on the aroma and/or flavour of the food (Fisher *et al.,* 2009).

In fact, there are a number of papers proposing the application of essential oils for the decontamination and storage of food, including for RTE food, but they have normally been proposed for use as liquid oils, not as vapours (Pittman *et al.,* 2010). The oils have even been used in salad storage, but in the form of liquid oil, not vapour (Belletti *et al.,* 2008). The only paper that can be found in the literature proposing the application of citrus fruit essential oil vapours for the surface decontamination of salads is the paper by Fisher *et al.* (2009). However, in this case the paper only focuses on studying *Enterococcus faecium* and *Enterococcus faecalis.*

In summary, despite an interest in applying essential oil vapours in solid food decontamination (of any type, ranging from whole and cut up fruits and vegetables to bakery and pastry products, and meat products, dairy products, and prepared dishes) (Kloucek *et al.,* 2012) having been scientifically demonstrated, the inventors have not found any patent which defines an industrially viable method for the vaporisation and application of the essential oil vapour (of a single type or combinations thereof) to the continuous industrial solid food decontamination. The only patent application found is GB2460468 A (C.PHILLIPS and K.FISHER, 2009), which describes a method of vaporisation of a mixture of essential oils of orange and bergamot which consists of heating that mixture at a temperature of 30 to 50°C for a period of 10 to 20 minutes in order to achieve complete vaporisation of the dose to be applied to the food to be surface decontaminated. This application then proposes treating the food to be decontaminated with this vapour for times of 30 seconds to 1 hour. However, these times for vaporising the mixture of essential oils are not really viable in continuous industrial food treatment processes.

The inventors also found patent application WO2014001201 A1, which relates to a device for evaporating essential oils which are absorbed on absorbent supports in the form of strips, to be applied to disinfecting closed spaces, such as a greenhouse. However, like in the aforementioned application, it faces difficulties in being applied to the continuous industrial disinfection of solid food before it is packaged or during packaging. The two aforementioned patent applications use evaporation times that are excessive for use in continuous solid food decontamination processes on an industrial level. The aforementioned patent applications do not take into account that all substances have an enthalpy of evaporation (expressed in J/g, i.e., Joules per gram of substance, or in J/mol, i.e., Joules per mole-gram of substance), and that the evaporation time will depend on the energy that is applied in the heating thereof, without changing the evaporation temperature. For example, Table 1 below shows the enthalpies of evaporation of some essential oils and of their major components.

**Table 1.**

| Essential oil | Enthalpy of evaporation (J/g) | Major component | Enthalpy of evaporation (J/g) |
|---|---|---|---|
| Orange | 277.39 | Limonene | 288.08 |
| Lemongrass | 336.02 | Citral | 291.09 |

| | | | |
|---|---|---|---|
| Source: Martins *et al.* (2011). | | | |

So if sufficient energy (expressed in J/s) is applied to a given mass (grams) of essential oil, evaporation of the essential oil can be achieved in a few seconds. Also, if the pressure is reduced, the evaporation temperature can be reduced, such that if the vapours are applied to a product that is at a higher temperature than the vapours, then the rapid condensation of the components of this essential oil vapour would not occur and it would remain in vapour form for a longer time in contact with the surface of the food.

### Description of the invention

Based on the foregoing, the present invention relates to a new method for the microbial surface decontamination of packaged solid food for use on an industrial scale, which is carried out before or during the step for closing the container; for example, before and/or during heat sealing, or also even before container dispatch.

In a novel manner, the method that is carried out by means of using essential oils, EOs, comprises:
a) evaporating the EOs in a vacuum vessel at a temperature between 20 and 150°C, preferably between 50 and 100°C, such that said evaporation takes place in a time of between 1 and 40 seconds, preferably between 1 and 30 seconds,
b) applying the EO vapours of step a) to the packaged solid food in a vacuum chamber or enclosure, where the vacuum-generated vapours are drawn along by air or by a mixture of food-grade gases and guided to the mentioned enclosure, according to a weight/volume ratio of 10 to 120 mg of essential oil evaporated and drawn along per litre of carrier air or mixture of carrier gases (this volume being measured at atmospheric pressure and a temperature of 25°C) guided to the enclosure where the food is arranged in an open container for the purpose of decontaminating it.

Step a) for evaporation is performed at an absolute pressure between 1 and 990 hPa, preferably between 5 and 500 hPa.

Step b) for applying the essential oil vapours is performed at an absolute pressure between 1 and 990 hPa, preferably between 5 and 800 hPa.

Furthermore, the EO vapours can be applied in step b) at a ratio of 15 to 60 mg of EOs vaporised for each litre of air or mixture of gases, this volume being measured at atmospheric pressure and a temperature of 25°C.

Optionally, vacuum cooling of the product to be decontaminated is performed before step b) for applying the oil vapours.

The EOs to be used can be pure essential oils, of a plant origin, selected from those which come from shoots or buds, flowers, leaves, stems, branches, seeds, fruits, roots, or the wood or bark, such as, for example, the essential oils of citrus fruits, of orange, lemon, mandarin, lime, grapefruit, bergamot, citronella, or of oregano, rosemary, thyme, lemongrass, cinnamon, basil, mint, dill, or of any part or fruit of a ligneous plant or which comes from herbaceous plants, such as, for example, tea tree, clove, fennel, pepper, *inter alia.* However, one or more of the components of these EOs, whether or not they are major components, selected from terpenes, or terpenoids, or aromatic or aliphatic constituents, such as, for example, limonene, thymol, carvacrol, cinnamaldehyde, p-cymene, eugenol, linalool, citral, geranial, *inter alia,* can also be used.

Optionally, the essential oil to be used in the method is a mixture of the preceding pure essential oils. This option may be with or without the addition of one or more of their components, whether or not they are major components, such as those selected from terpenes, or terpenoids, or aromatic or aliphatic constituents, such as, for example, thymol and carvacrol, *inter alia.* In this case, they are specifically formulated with given proportions of each of the EOs making up the mixture, not including or including one or more of their components, for example, those mentioned above, thymol, carvacrol, *inter alia.* These mixtures must be formulated for each application. In fact, it can be found through experimentation that each type of target microorganism requires a given essential oil or a given combination of essential oils, not including or including one or more of their components (selected from terpenes, or terpenoids, or aromatic or aliphatic constituents, such as, for example, thymol, carvacrol, *inter alia*) to achieve the inactivation thereof.

### Brief Description of the Drawings

Figure 1 depicts an industrial embodiment of the process for the surface decontamination of packaged solid food, where EO vapours are applied to each container, before closing or heat sealing.
Figure 2 depicts another industrial embodiment of the process for the surface decontamination of solid food, where EO vapours are applied to several containers at the same time.
Figure 3 depicts an industrial embodiment of the process for the surface decontamination of packaged solid food in which a continuously operating treatment tunnel is used.
Figure 4 depicts an embodiment for the microbial surface decontamination of packaged fresh plant products, such as fruits and vegetables, previously subjected to vacuum cooling.

### Embodiments

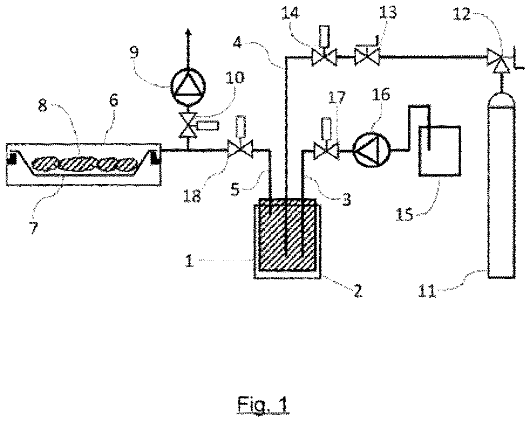

A non-exclusive embodiment of this invention is described in Figure 1. It is an installation in which the vacuum evaporation of the EOs is carried out in the vacuum vessel 1, which is heated by a jacket 2, which can be solid (made of aluminium or another metal or alloy) or hollow and through which there flows a thermal fluid, where the heating agent can be a resistor, or water vapour, or hot water, or thermal oil, with a manual or automatic control system that allows heating the vessel 1 at a given temperature, which will depend on the type of essential oil that is used, but it must be between 20 and 150°C, preferably between 50 and 100°C.

The essential oil is metered into the vessel 1 at atmospheric pressure through a tube 3 by means of a metering pump 16 (which can be a normal metering pump or a metering micropump for small doses) taking the essential oil from a storage vessel 15. When metering the essential oil into the vessel 1, valves 14 and 18 are closed whereas valve 17 is open. Before metering, the vessel 1 is pre-heated at the desired temperature, according to the essential oil. Next, or before metering, or during metering of the essential oil into the vessel 1, a vacuum is generated by means of a vacuum pump 9 with valve 10 being opened and valve 18 closed, in a vessel 6 in which there is a container 7 with food 8 (there can optionally be several containers 7 in the vessel 6). This food can be of a plant or animal origin, including seafood, such as fish and shellfish, or it can be a prepared dish with various ingredients, or a pastry or baked good product, or any other solid food. The absolute pressure in the vessel 6 must be 1 to 200 hPa, preferably 5 to 150 hPa. Once the vacuum has been generated in the vessel 6, one valve 10 is closed and valve 18 is opened, connecting vessel 6 with vessel 1 through a tube 5. This causes an almost instantaneous evaporation of the hot essential oils because it is caused at approximately the vacuum level of the vessel 6. Next, a few seconds later, valve 14 opens (manual pressure reduction valve 13 and shutoff valve 12 for shutting off the gas cylinder 11 containing the desired mixture of gases for packaging the product in question with the most suitable modified atmosphere being open). Therefore, in just a few seconds, the EO vapours generated in 1 are drawn along by this mixture of gases until filling each container 7 containing the food 8. Next, heat sealing of the container is performed because said container has already been previously arranged in the enclosure 6 that is part of the heat sealing device.

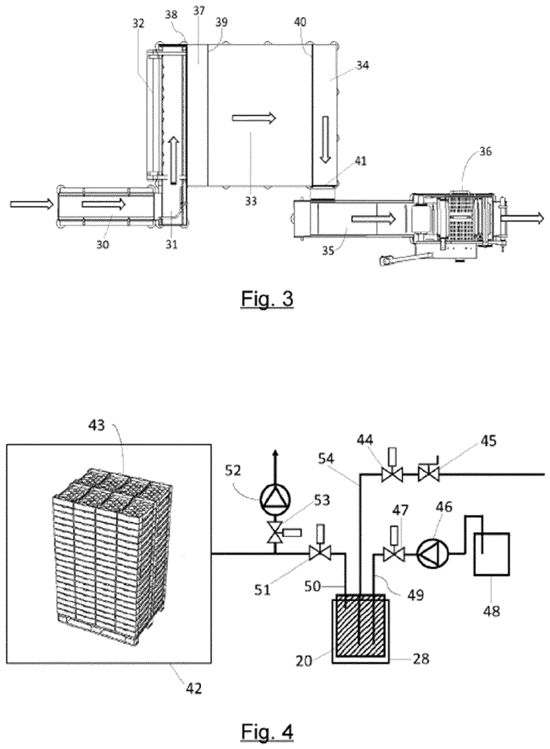

Optionally, the installation of Figure 1 described above can be housed in the heat sealing device 36 (indicated in Figure 3). The dose of essential oil vapour to be added to each container, measured in milligrams (mg) of essential oil per litre of carrier gases filling each container with the food (this volume being measured at atmospheric pressure and at a temperature of 25°C), is determined for each food and each type of mixture of EOs that is used so that it will be effective on the microbial load the food may have. With this injection of EO vapours in each container, an initial decrease in the microbial load the food may have is achieved, and this antimicrobial effect and microbial load-reducing effect produced in the food can be maintained for a certain time, throughout the shelf life thereof. The shelf life of the food is thereby prolonged, while at the same time the safety of said food is increased because the microbial load corresponding to pathogenic microorganisms is also reduced. In given cases, this antimicrobial effect can be so effective that it makes it unnecessary to use an MA. In this case, the gas used for drawing along essential oil vapours and filling the container until achieving atmospheric pressure can be air from a cylinder or from the atmosphere.

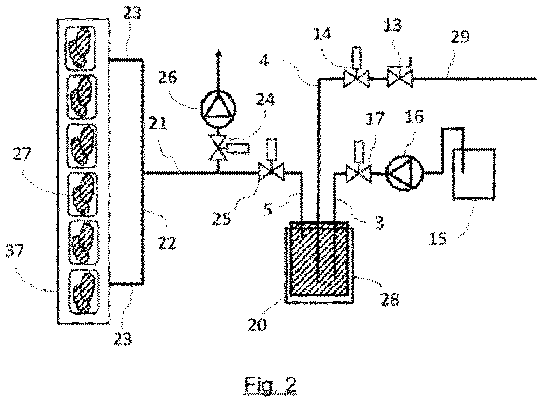

Other non-exclusive embodiments of the method of the invention are described in Figures 2 and 3.

Figure 2 shows an installation in which the step for vacuum-evaporating the EOs is carried out in the vacuum vessel 20, which is heated by a jacket 28, which can be solid (made of aluminium or another metal or alloy) or hollow and through which there flows a thermal fluid, where the heating agent can be a resistor, or water vapour, or hot water, or thermal oil, with a manual or automatic control system that allows heating the vessel 20 at a given temperature, which will depend on the type of essential oil that is used, but it must be between 20 and 150°C, preferably between 50 and 100°C.

By means of a tube 3 and the metering pump 16 (which can be a normal metering pump or a metering micropump for small doses), the essential oil of storage vessel 15 is metered and introduced at atmospheric pressure into the vessel 20. Before metering and introducing the oil, the vessel 20 is pre-heated at the desired temperature, according to the essential oil to be used. During metering into the vessel 20, valves 14 and 25 remain closed, while valve 17 is open. Next, or before metering, or during metering of the essential oil into the vessel 20, a vacuum is generated in the vessel 37 by means of a vacuum pump 26 and with valve 24 open and valve 25 closed. The absolute working pressure in the vessel 20 must be between 1 hPa and 990 hPa, preferably between 5 and 200 hPa. Once the vacuum has been generated in the vessel 37, valve 24 is closed and valve 25 is opened, connecting vessel 37 with vessel 20 through tubes 5, 21, 22 and 23. This causes an almost instantaneous evaporation of the hot EOs because it is caused at approximately the vacuum level of the vessel 37. Next, a few seconds later, valve 14 opens (a manual valve 13 for communicating with the outside air through tubes 29 and 4 being open). Therefore, the EO vapours generated in 20 are drawn along by the outside air entering through 29 (this air could optionally be filtered through a highly efficient particle retaining HEPA filter, placed before valve 14, and/or it could come from a cylinder containing pressurized air until reaching and filling the vessel 37 where the containers 27 containing the food to be decontaminated are arranged). Next, the set of containers 27 could enter a tunnel 33 (like that indicated in Figure 3, which is kept at atmospheric pressure) so that the food is in contact with the vapours during the residence time of these containers inside the tunnel 33. Then, these containers may or may not be closed by means of heat sealing or another container closure method. The food thus treated can be of a plant or animal origin, for example, vegetables and fruits that are either whole or cut up, fresh meats or cooked meat products, fish and shellfish, or any other food with different ingredients, such as prepared dishes.

Figure 3 illustrates an installation in which the aforementioned vessel 37 can be comprised in a treatment tunnel for treating with EOs packaged solid food in open containers, such as bowls, deep trays, trays, baskets, dishes that may be more or less deep made of plastic or another food-grade material. These containers will be heat sealed, with or without MA (modified atmosphere), in a heat sealing device 36. The containers filled with product to be decontaminated are fed by belts 30 and 31 and pushed by an element 32 into a tunnel 33. To that end, a hatch 38 is opened and allows the entry of the product-filled containers into the enclosure 37 housed inside the treatment tunnel 33. This enclosure or vessel 37 would also be closed by means of the hatch 39. Optionally, this enclosure 37 could be opened by moving up the entire upper part thereof (including the ceiling and walls thereof), being separated from the base thereof, in order to let containers with food to be treated with essential oil vapours in or out.

When the vacuum is generated in the enclosure 37, the hatches 38 and 39 are closed and said enclosure or vessel 37 is completely leak-tight. Then the EO vapours are applied to the food placed in the open containers 27 (indicated in Figure 2). The absolute pressure in the vessel 37 must be 1 to 990 hPa, preferably 5 to 200 hPa. The connection between the vessels 20 and 37 must last for a time between 1 and 60 seconds, preferably between 5 and 30 seconds. After these seconds, hatch 39 (or both hatches 38 and 39) is opened and the belt of the tunnel 33 makes the containers come out of the enclosure 37 and move forward a cycle inside the tunnel 33. Next, the belt is stopped, hatch 39 is closed and hatch 38 is opened (or both hatches 38 and 39 are kept open), allowing the entry of a new load of containers 27 filled with food into the enclosure 37 in which application of EO vapours generated in the vessel 20 is performed.

The tunnel 33 will have several forward movement and stop steps or cycles that involve residence times of the filled containers inside this tunnel of 10 s to 300 s, preferably 10 s to 120 s. The open and product-filled containers that received EO vapour treatment exit through the tunnel 33 by means of a belt 34 and are taken to the heat sealing device 36 by means of a belt 35. Optionally, this belt 35 and its intersection with belt 34 could be enclosed in a tunnel to prevent recontamination with particles from the outside air, and this tunnel covering the mentioned belt 35 could have a filtered air injection through a highly efficient particle retaining HEPA filter. The belt 34 will be closed by means of hatches 40 and 41, which will allow suctioning out the residual vapours that remain in the open containers so that they are not given off into the room in which this treatment installation defined by Figure 3 is housed. In this installation, the EO vapours are generated in the evaporator 20 of the installation described in Figure 2. Furthermore, to enhance the effect of the EO vapours in the surface decontamination of food, the same combination of EO vapours used in vessel 37, or another different combination with different EO vapours, can be injected together with the gases of the MA applied in the heat sealing device 36, which would have an installation like the one described in Figure 1 for generating and applying those EO vapours. Therefore, the combination of EO vapours applied in the vessel 37 to the packaged product may have a specific effect on pathogenic microorganisms, such as *E. coli, Listeria monocytogenes* or *Salmonella, inter alia,* whereas the combination of EOs applied to the container during heat sealing by means of the installation described in Figure 1, which would be housed in the heat sealing device 36, could be selected so that it had a specific effect on spoilage microorganisms, which will be according to the type of product, yeasts, fungi or bacteria.

As indicated above, the dose of essential oil vapour to be added in the air in the enclosure 37 for decontaminating the product in each container (measured in mg of essential oil per litre of air of this enclosure or vessel 37, and this volume of one litre being measured at atmospheric pressure and a temperature of 25°C) is determined for each food and each type of mixture of EOs used so that it will be effective on a given microbial load (pathogenic microorganisms and/or spoilage microorganisms) the food may have. With this application of EO vapours in each container in the treatment tunnel 33, an initial decrease of the microbial load the food may have is achieved, and this antimicrobial effect and microbial load-reducing effect produced in the food can be maintained for a certain time, throughout the shelf life thereof. The shelf life of the product is thereby prolonged, while at the same time the safety of said food is increased because the microbial load corresponding to pathogenic microorganisms is also reduced.

Figure 4 illustrates another non-exclusive embodiment of this invention. It is an industrial installation in which vacuum evaporation is performed in the vessel 20, and a vacuum application of EO vapours is performed in a vessel or enclosure 42 (right after applying a step of vacuum cooling) for the microbial surface decontamination of fresh plant products, such as, fruits and vegetables packaged in cases 43 made of cardboard, wood or plastic. The vacuum evaporation of the EOs is carried out in vacuum vessel 20, which is heated by a jacket 28, which can be solid (made of aluminium or another metal or alloy) or hollow and through which there flows a thermal fluid. The heating agent can be a resistor, or water vapour, or hot water, or thermal oil, with a manual or automatic control system that allows heating the vessel 20 at a given temperature, which will depend on the type of essential oil that is used, but it must be between 20 and 150°C, preferably between 50 and 100°C.

The essential oil is metered into the vessel 20 at atmospheric pressure through a tube 49 by means of a metering pump 46 (which can be a normal metering pump or a metering micropump for small doses) taking the essential oil from a storage vessel 48. During this metering of essential oil into the vessel 20, valves 44 and 51 are closed and valve 47 is open. Before this metering, the vessel 20 is pre-heated at the desired temperature, according to the essential oil used. Before, during or after performing the preceding metering of essential oil into the vessel 20, a vacuum is generated in the vessel or enclosure 42 by means of a vacuum pump 52 with valve 51 being closed and valve 53 open. The absolute pressure in the vessel 42 must be 1 to 500 hPa, preferably 5 to 200 hPa. Once the desired vacuum has been generated in this vessel 42, a valve 51 is opened, vacuum pump 52 being stopped and valve 53 closed, and the vessel 42 is thus connected with the vessel 20 through a tube 50. This causes an almost instantaneous evaporation of the hot EOs and the drawing along thereof, in vapour form, towards the vessel 42. Then, the EO vapours are finally drawn along by means of the air entering from the outside when the valves 44 and 45 are opened (they are opened after opening valve 51, keeping valves 47 and 53 closed). In this vessel or enclosure 42 there are a given number of containers or cases 43, which may or may not be arranged on pallets, with the food to be treated (usually of a plant origin). Once application of the EO vapours has ended, which will last 10 s to 300 s, preferably 10 s to 120 s, the enclosure or vessel 42 is then opened to discharge the packaged product into cases, and to dispatch same in refrigerated trucks.

As indicated above, the dose of essential oil vapour to be added in the air in the enclosure 42 for the decontamination of the product in each container, measured in mg of essential oil per litre of air of this enclosure or vessel 42, is determined for each product and each type of mixture of EOs used so that it will be effective on that given microbial load in connection with pathogenic microorganisms and/or spoilage microorganisms the food may have. With this application of EO vapours in each container in this vessel 42, an initial decrease of the microbial load the food may have is achieved, and this antimicrobial effect and microbial load-reducing effect produced in the food can be maintained for a certain time, throughout the shelf life thereof. The shelf life of the product is thereby prolonged, while at the same time the safety of said food is increased because the microbial load corresponding to pathogenic microorganisms is also reduced.

The constructive details relating to the hygienic design of the equipment depicted in Figure 3 must comply with specifications for the hygienic design of food processing and packaging equipment, for example, in documents 8, 10 and 17 of the EHEDG, (EHEDG, Hygienic equipment design criteria, Second Edition, April 2004. Chipping Campden, ISBN: 0907503136, doc. 8; EHEDG: Hygienic design of closed equipment for the processing of liquid food, November 2003, Chipping Campden, doc. 10; EHEDG, Method for the assessment of in-place cleanability of food processing equipment, 3^{rd} edition, July 2004, Chipping Campden, ISBN: 0907503179, doc 2. EHEDG: Hygienic design of pumps, homogenizers and devices in contact with liquids, 2^{nd} edition, September 2004, Chipping Campden, ISBN: 0907503187, doc. 17), especially in relation to (1) good levels of surface polish or finish levels, such as, for example, mirror, of the internal components of this equipment (the EO vapour treatment tunnel 33 and the elements for conveying and handling product-filled containers, such as belts 30, 31, 34 and 35, and the belt of the tunnel 33); (2) rounded intersections between walls of the different components of the tunnel 33 and the heat sealing device 36; (3) components of the heat sealing stations (of the heat sealing device 36) cannot have any space that is hard to automatically clean and disinfect where dirt may accumulate; (4) no lubrication systems in the product-filled container heat sealing or conveyance region; (6) the lower part of the different regions which are kept within the product-loaded container conveyance region will have a hygienic and completely drainable design to assure that no water or washing and disinfecting solution waste are left behind when complete drainage thereof is performed during the washing and disinfecting operations. Optionally, this equipment of Figure 3 can have an automatic washing and disinfecting system that performs washing and disinfection functions in the equipment without having to take said equipment apart.

### Industrial Applications

The method herein described has an industrial application in the surface decontamination of the following solid, fresh or processed food:
- of a plant origin, such as fresh fruits and vegetables that are either whole or cut up, salads of any type and composition;
- of an animal origin, such as meat products in pieces or slices; cheeses in pieces or slices; fish that may or may not be whole, eviscerated, in pieces or filleted; seafood that is whole or in pieces);
- bakery products, such as sliced bread;
- pastry goods;
- confectionery goods that may be whole or in pieces, and
- prepared dishes of any type which may sustain some type of surface contamination before being packaged or once packaged and before heat sealing or closing and/or dispatch.

Specifically, this invention proposes a new industrial method for the vacuum evaporation and vacuum application of EOs in vapour form for the surface decontamination of packaged solid food before heat sealing or closing and/or dispatch.

### References:

ABADIAS, M., USALL, J., ANGUERA, M., SOLSONA, C., VIÑAS, I. 2008. Microbiological quality of fresh, minimally-processed fruit and vegetables, and sprouts from retail establishments. International Journal of Food Microbiology 123, 121-129.
ARTES F., GOMEZ P., AGUAYO E., ESCALONA V., ARTES-HERNANDEZ F. 2009. Sustainable sanitation techniques for keeping quality and safety of fresh-cut plant commodities. Postharvest Biology and Technology 51, 287-296.
BARBOSA, L. N., ALVES, F. C. B., ANDRADE, B. F. M. T., ALBANO, M., CASTILHO, I. G., RALL, V. L. M., JUNIOR, A. F. 2014. Effects of Ocimum basilicum Linn Essential Oil and Sodium Hexametaphosphate on the Shelf Life of Fresh Chicken Sausage. Journal of Food Protection 77(6), 981-986.
BASSOLÉ, I. H. N., JULIANI, H. R. 2012. Essential oils in combination and their antimicrobial properties. Molecules, 17(4), 3989-4006.
BELLETTI N, LANCIOTI R, PATRIGNANI F, GARDINI F. 2008. Antimicrobial efficacy of citron essential oil on spoilage and pathogenic microorganisms in fruit-based salads. Journal of Food Science 73, M331-M338.
CAPONIGRO V., VENTURA M., CHIANCONE I., AMATO L., PARENTE E., PIRO F. 2010. Variation of microbial load and visual quality of ready-to-eat salads by vegetable type, season, processor and retailer. Food Microbiology 27, 1071-1077.
FISHER K., PHILLIPS C., MCWATT L. 2009. The use of an antimicrobial citrus vapour to reduce Enterococcus sp. on salad products. International Journal of Food Science and Technology 44, 1748-1754.
FISHER, K. & PHILLIPS, C. 2006. The effect of lemon, orange and bergamot essential oils and their components on the survival of Campylobacter jejuni, Escherichia coli 0157, Listeria monocytogenes, Bacillus cereus and Staphylococcus aureus in vitro and in food systems. Journal of Applied Microbiology 101, 1232-1240.
FRANZ, E., VAN BRUGGEN, A.H.C. 2008. Ecology of E. coli O157:H7 and Salmonella enterica in the primary vegetable production chain. Critical Reviews in Microbiology 34, 143-161.
FRODER, H., MARTINS, C.G., DE SOUZA, K.I., LANDGRAF, M., FRANCO, B., DESTRO, M.T. 2007. Minimally processed vegetable salads, microbial quality evaluation. Journal of Food Protection 70, 1277-1280.
GIL M.I., SELMA M.V., LÓPEZ-GÁLVEZ F., ALLENDE A. 2009. Fresh-cut product sanitation and wash water disinfection: Problems and solutions. International Journal of Food Microbiology 134, 37-45.
GÓMEZ-LÓPEZ, V.M., RAGAERT, P., DEBEVERE, J., DEVLIEGHERE, F. 2008. Decontamination methods to prolong the shelf-life of minimally processed vegetables, state-of-the-art. Critical Reviews in Food Science and Nutrition 48, 487-495.
GRAÇA A., ABADIAS M., SALAZAR M., NUNES C. 2011. The use of electrolyzed water as a disinfectant for minimally processed apples. Postharvest Biology and Technology 61, 172-177.
HAN, J. H., PATEL, D., KIM, J. E., & MIN, S. C. 2014. Retardation of Listeria Monocytogenes Growth in Mozzarella Cheese Using Antimicrobial Sachets Containing Rosemary Oil and Thyme Oil. Journal of Food Science, 79(11), E2272-E2278.
INOUYE, S. (2003). Laboratory of evaluation of gaseous essential oils (Part 1). The International Journal of Aromatherapy, 13, 95-107.
ISSA-ZACHARIA A., KAMITANI Y., MIWA N., MUHIMBULA H., IWASAKI K. 2011. Application of slightly acidic electrolyzed water as a potential non-thermal food sanitizer for decontamination of fresh ready-to-eat vegetables and sprouts. Food Control 22, 601-607
JACXSENS, L., DEVLIEGHERE, F., DEBEVERE, J. 2001. Temperature dependence of shelf life as affected by microbial proliferation and sensory quality of equilibrium modified atmosphere packaged fresh produce. Postharvest Biology and Technology 26, 59-73.
JUNTTILA, J.R., NIEMELA, S.I., HIRN, J. 1988. Minimum growth temperatures of Listeria monocytogenes and non-haemolytic listeria. Journal of Applied Bacteriology 65, 321-327.
KLOUCEK, P., SMID, J., FRANKOVA, A., KOKOSKA, L., VALTEROVA, I., PAVELA, R. 2012. Fast screening method for assessment of antimicrobial activity of essential oils in vapor phase. Food Research International, 47(2), 161-165.
LONCAREVIC, S., JOHANNESSEN, G.S., RORVIK, L.M. 2005. Bacteriological quality of organically grown leaf lettuce in Norway. Letters in Applied Microbiology 41, 186-189.
MARTINS, P., SBAITE, P., BENITES, C., MACIEL, M. 2011. Thermal characterization of orange, lemongrass, and basil essential oils. Chemical Engineering Transactions 24, 463-468.
MOREIRA, M. R., PONCE, A. G., DEL VALLE, C. E., ROURA, S. I. 2005. Inhibitory parameters of essential oils to reduce a foodborne pathogen. LWT-Food Science and Technology, 38(5), 565-570.
NGUYEN-THE, C., CARLIN, F. 1994. The microbiology of minimally processed fresh fruits and vegetables. Critical Reviews in Food Science and Nutrition 34, 371-401.
PAVAN DA SILVA, S.R., FRIZZO VERDIN, S.E., PEREIRA, D.C., SCHATKOSKI, A.M., ROTT, M.B., CORÇÃO, G. 2007. Microbiological quality of minimally processed vegetables sold in Porto Alegre, Brazil. Brazilian Journal of Microbiology 38, 594-598.
PIANETTI, A., SABATINI, L., CITTERIO, B., PIERFELICI, L., NINFALI, P., BRUSCOLINI, F. 2008. Changes in microbial populations in ready-to-eat vegetable salads during shelf life. Italian Journal of Food Science 20, 245-254.
PITTMAN C.I, PENDLETON S., BISHA B., O'BRYAN C.A., BELK K.E., GOODRIDGE L., CRANDALL P.G., RICKE S.C. 2010. Activity of Citrus Essential Oils against Escherichia coli O157:H7 and Salmonella spp. and Effects on Beef Subprimal Cuts under Refrigeration. Journal of Food Science, 76(6), M433-M438.
RAGAERT, P., DEVLIEGHERE, F., DEBEVERE, J. 2007. Role of microbiological and physiological spoilage mechanisms during storage of minimally processed vegetables. Postharvest Biology and Technology 44, 185-194.
SCIFÒ, G., RANDAZZO, C.L., RESTUCCIA, C., FAVA, G., GAGGIA, C. 2009. Listeria innocua growth in fresh cut mixed leafy salads packaged in modified atmosphere. Food Control 20, 611-617.
SEOW, Y. X., YEO, C. R., CHUNG, H. L., YUK, H. G. 2014. Plant essential oils as active antimicrobial agents. Critical Reviews in Food Science and Nutrition, 54(5), 625-644.
VALENTIN-BON, I., JACOBSON, A., MONDAY, S.R., FENG, P.C.H. 2008. Microbiological quality of bagged cut spinach and lettuce mixes. Applied Environmental Microbiology 74, 1240-1242.

## Claims

1. A method for the surface decontamination of packaged solid food which is performed before or during the closure of the container or before container dispatch by means of essential oils (EOs), **characterised by** comprising the following steps:
a) evaporating the EOs in a vacuum vessel at a temperature between 20 and 150°C, preferably between 50 and 100°C, such that said evaporation takes place in a time of between 1 and 40 seconds, preferably between 1 and 30 seconds,
b) applying the EO vapours to the packaged solid food located in a vacuum chamber or enclosure, wherein the generated vapours are drawn along by air or by a mixture of food-grade gases to this enclosure at a ratio of 10 to 120 mg of essential oil evaporated per litre of air or mixture of gases, this volume being measured at atmospheric pressure and a temperature of 25°C, and guided to where the food is arranged in an open container.

2. The method according to claim 1, **characterised in that** step a) is performed at an absolute pressure between 1 and 990 hPa, preferably between 5 and 500 hPa.

3. The method according to claims 1 and 2, **characterised in that** step b) is performed at an absolute pressure between 1 and 990 hPa, preferably between 5 and 800 hPa.

4. The method according to claim 1, **characterised in that** vacuum cooling is performed before step b).

5. The method according to claims 1 to 4, **characterised in that** the EOs that are used are pure EOs of a plant origin, selected from those which come from shoots or buds, flowers, leaves, stems, branches, seeds, fruits, roots, or the wood or bark, or a mixture thereof.

6. The method according to claims 1 to 5, **characterised in that** one of the components, whether or not it is the main component, of these EOs selected from terpenes, or terpenoids, or aromatic or aliphatic constituents, or a mixture thereof, or a mixture thereof with a mixture of the mentioned pure EOs, is used as an essential oil.

7. The method according to claims 1 to 6, **characterised in that** the packaged food to be decontaminated is in an open container, which is made of cardboard, wood, plastic, biodegradable plastic material or another food-grade material.

8. The method according to claims 1 to 7, **characterised in that** the food to be decontaminated is one of the following: fresh or processed solid food; food of a plant or animal origin, packaged in the form of pieces or slices; cheeses; fish that is either whole or filleted; other seafood that is either whole or in pieces; bakery products, sliced bread, bakery, pastry or confectionery goods; prepared dishes.

9. The method according to claim 1, **characterised in that** step b) is performed at a ratio of 15 to 60 mg of vaporised EOs per litre of air or mixture of gases, this volume being measured at atmospheric pressure and a temperature of 25°C.
